# EUROPEAN PATENT SPECIFICATION

(11) **EP 2 849 247 B1**
(45) Date of publication and mention of the grant of the patent: **28.03.2018**
(21) Application number: 14183402.8
(22) Date of filing: 03.09.2014
(51) Int. Cl.: H01M 2/02

(54) **Rechargeable battery**
Wiederaufladbare Batterie
Batterie rechargeable

(30) Priority: 16.09.2013 KR 20130111292
(43) Date of publication of application: 18.03.2015
(73) Proprietor: Samsung SDI Co., Ltd., Yongin-si, Gyeonggi-do (KR)
(72) Inventor: Byun, Sang-Won, Yongin-si, Gyeonggi-do (KR); Moon, Young-Sik, Yongin-si, Gyeonggi-do (KR); Lee, Hong-Hyeon, Yongin-si, Gyeonggi-do (KR); Kim, Joong-Heon, Yongin-si, Gyeonggi-do (KR); Ahn, Byung-Kyu, Yongin-si, Gyeonggi-do (KR)
(74) Representative: Gulde & Partner

(56) References cited:
- WO-A1-2012/038160
- JP-A- 2006 120 419
- US-A1- 2011 195 301
- US-A1- 2013 034 764

## Description

### BACKGROUND

### 1. Field

Embodiments relate generally to a rechargeable battery.

### 2. Description of the Related Art

A rechargeable battery is a battery that can be repeatedly charged and discharged, unlike a primary battery. A small rechargeable battery is used as a power supply for small electronic devices such as cellular phones, notebook computers, and camcorders, while a medium or large rechargeable battery is used as a power supply for driving motors in hybrid vehicles and the like.

A large capacity high power rechargeable battery using a non-aqueous electrolyte with high energy density has been recently developed. The large capacity high power rechargeable battery is constructed with a high power battery module having a plurality of rechargeable cells coupled to each other in series or in parallel. The high power battery module may be used in electric vehicles requiring high power. The rechargeable battery may have a cylindrical shape, a square shape, or a pouch shape.
JP 2006 120419 A discloses (Figs.1-2 and [0023]-[0024], [0026]-[0028]) a lithium secondary battery of a flat box shape in a substantially rectangular parallelepiped with eight corner parts (1), comprising: an electrode body unit (8) to perform charging and discharging; external terminal (the positive-electrode terminal 2, negative-electrode terminal 4); a case (10) that receives the electrode assembly (8); and an insulation tape (20), including a portion that is separated into at least two pieces and attached to an external surface of the case and consisting of a triple-layer structure laminate-film (22, 24, 26) of three sheets of the same kind and a barrier member (31), the edge portions of the case are overlapped with at least three sheets ((22, 24 and 31) or (26, 24 and 31)) characterized in that the insulation tape (20) and the barrier member, made of metal ([0026]) (31) are configured to overlap every corner (10a) of a bottom side of the case (10) and every corner (10a) of a top side of the case (10), with at least three sheets ((22, 24 and 31) or (26, 24 and 31)).
US 2013/034764 A1 discloses one insulating film covering the edges and corner of an electrode body unit (Fig.7), and in certain embodiments an overlap of the film is realised (Fig.26).

### SUMMARY

Embodiments are directed to a rechargeable battery including an electrode assembly to perform charging and discharging, an electrode terminal electrically connected to the electrode assembly, a case that receives the electrode assembly, a cap plate coupled to the case, and an insulation tape including a portion separated into at least two pieces and attached to an external surface of the case, edge portions of the case being overlapped with at least three sheets of the insulation tape attached to the external surface of the case.

The insulation tape may include a first tape attached to a surface of the case along a circumference of the case, a second tape attached to overlap a part of the first tape at an edge of one side of the first tape, a third tape attached to overlap a part of the first tape at an edge of another side of the first tape facing the edge of the one side of the first tape, and a fourth tape attached along the circumference of the case and covering the second tape and the third tape.

The second tape may overlap a part of the first tape along an edge portion of the case at a position where the cap plate of the case is located.

The second tape may be bent along one of the edge portions of the case. An edge of one side of the second tape may extend in a surface direction of the cap plate. An edge of another side of the second tape may extend to cover a part of the surface of the case.

The third tape may overlap a part of the first tape along an edge of the first tape at a bottom side of the case.

The third tape may be bent along another of the edge portions of the case. An edge of one side of the third tape may extend to cover a bottom side of the case. An edge of another side of the third tape may extend toward a center of the case in a length direction of the case.

The fourth tape may cover a same area as the first tape.

The fourth tape may be attached to an external side of the case to overlap an overlapped part of edges of the first tape, an edge of the second tape, and an edge of the third tape.

The insulation tape may overlap a corner of a bottom side of the case and a corner of the case where the cap plate is coupled to the case, with at least three sheets of the insulating tape.

The insulation tape may include a base tape attached along a corner at a position where the cap plate is coupled to the case and a corner at a bottom side of the case, an edge of the base tape including multiple bends such that the edge of the base tape overlaps itself with at least twice, and a cover tape covering the base tape, the cover tape being attached along a circumference of the case.

A bent groove may be formed in an end of the edge of the base tape.

The cover tape may be attached to the circumference of the case such that an edge of the cover tape is inserted into the bent groove.

The base tape may include a top base tape attached along a corner of the case at a position where the cap plate is coupled to the case, and a bottom base tape attached along a corner at the bottom side of the case.

The top base tape may be bent along a corner of the case. An edge of one side of the top base tape may be extended in a surface direction of the cap plate. An edge of another side of the top base tape may be extended to cover a part of a surface of the case.

The bottom base tape may be bent along a corner at a bottom side of the case. An edge of one side of the bottom base tape may extend to cover the bottom side of the case. An edge of another side of the bottom base tape may extend toward a lateral side of the case.

### BRIEF DESCRIPTION OF THE DRAWINGS

Features will become apparent to those of skill in the art by describing in detail exemplary embodiments with reference to the attached drawings in which:
FIG. 1 illustrates a perspective view of a rechargeable battery according to an exemplary embodiment.
FIG. 2 illustrates a cross-sectional view with respect to a line II-II of FIG. 1.
FIG. 3 illustrates a cross-sectional view with respect to a line III-III of FIG. 1.
FIG. 4 illustrates a perspective view of a state in which a fourth tape is separated while first to third tapes are attached to a case.
FIG. 5 illustrates a perspective view of a state in which second to fourth tapes are separated while a first tape is attached to wrap a circumference of the case.
FIG. 6 illustrates a cross-sectional view of a rechargeable battery according to another exemplary embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. Like reference numerals refer to like elements throughout.

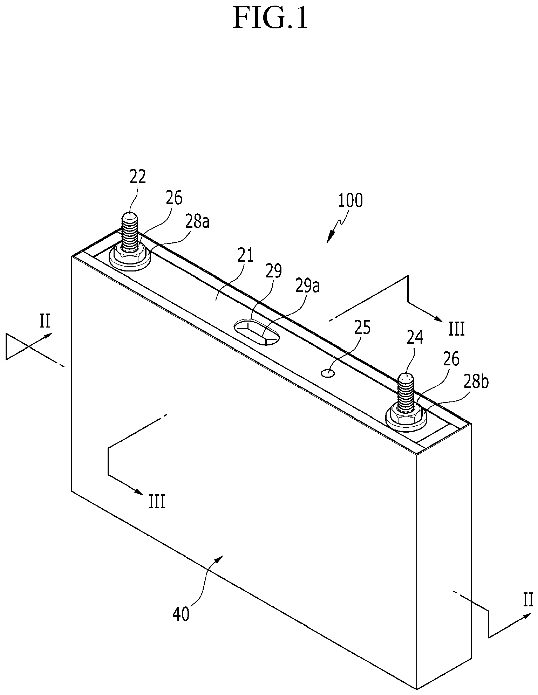

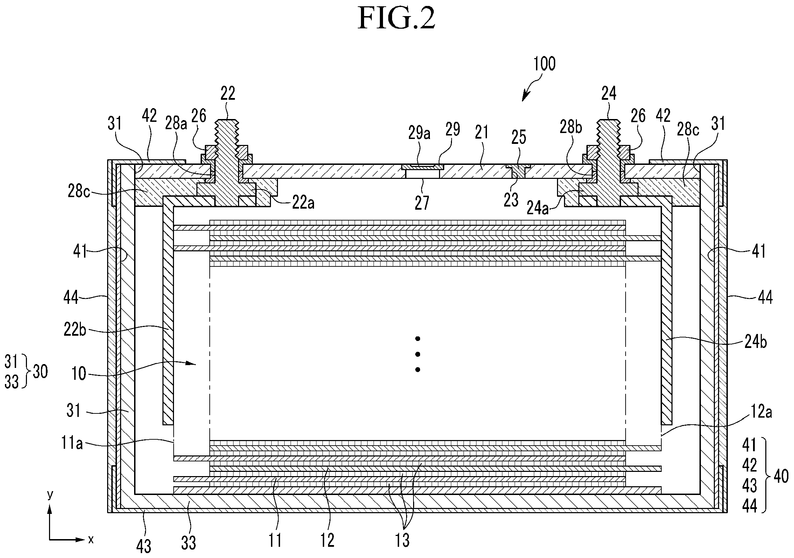

FIG. 1 illustrates a perspective view of a rechargeable battery according to an exemplary embodiment, and FIG. 2 illustrates a cross-sectional view with respect to a line II-II of FIG. 1.

As shown in FIG. 1 and FIG. 2, the rechargeable battery 100 may include an electrode assembly 10 to perform charging and discharging, terminals 22 and 24 electrically connected to the electrode assembly 10, a case 30 that receives the electrode assembly 10 while the terminals 22 and 24 are drawn out of the case, and an insulation tape 40 attached to an external surface of the case 30. A cap plate 21 may be installed in an opening 31 of the case 30, and the terminals 22 and 24 including a positive electrode terminal 22 and a negative terminal 24 may be installed on the cap plate 21.

A positive electrode 11 and a negative electrode 12 each include a coated region that is generated by coating an active material on a current collector made of a thin-plate metal foil, and respective uncoated regions 11a and 12a on which the active material is not coated. The positive electrode uncoated region 11a may be formed at a first end in a length direction of the positive electrode 11, and the negative uncoated region 12a may be formed at a second end in a length direction of the negative electrode 12.

The positive electrode 11 and the negative electrode 12 may be stacked with a separator 13 that is an insulator therebetween, may be spirally-wound by using a spirally wound roll, and may form a jellyroll-type electrode roll 10. The electrode roll 10 may be pressurized by a press and may be formed to be flat so that the electrode roll 10 may be installed in the case 30.

The case 30 may be substantially formed to be a cuboid, and the opening 31 may be formed in one side thereof.

The cap plate 21 may be formed as a thin plate and may be coupled to and installed at the opening 31 of the case 30. A seal stopper 25 may be installed in an electrolyte injection opening 23 in the cap plate 21. A vent plate 29 in which a notch 29a is formed may be installed in a vent hole 27 in the cap plate 21 so as be opened at a predetermined pressure.

The positive electrode terminal 22 and the negative electrode terminal 24 may be installed to pass through the cap plate 21. Flanges 22a and 24a supported below the cap plate 21 may be formed at the bottom of the positive electrode terminal 22 and the negative electrode terminal 24. An external circumferential surface of an upper column of the positive electrode terminal 22 and the negative electrode terminal 24 that protrudes outside the cap plate 21 may be screw-processed. In addition, nuts 26 supporting the positive electrode terminal 22 and the negative electrode terminal 24 at their tops may be fastened to the positive electrode terminal 22 and the negative electrode terminal 24.

A gasket 28a may be installed between the positive electrode terminal 22 and the cap plate 21. Further, a gasket 28b may be installed between the negative terminal 24 and the cap plate 21 to seal a space between the terminals 22 and 24 and the cap plate 21.

The positive electrode terminal 22 may be electrically connected to the positive electrode 11 through a positive electrode lead tab 22b as a medium, and the negative terminal 24 may be electrically connected to the negative electrode 12 through a negative electrode lead tab 24b as a medium. An insulation member 28c may be inserted between the positive electrode terminal 22 and the positive electrode lead tab 22b and between the negative terminal 24 and the negative electrode lead tab 24b.

The insulation tape 40 may be attached to an external surface of the case 30.

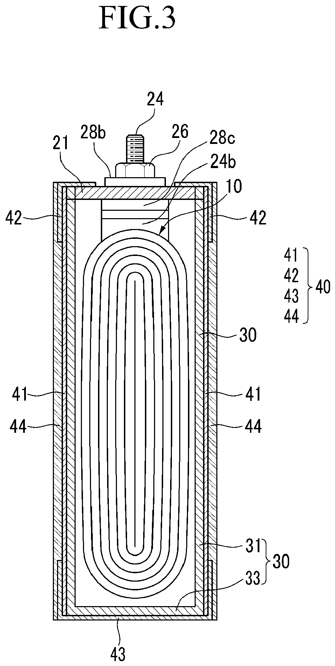

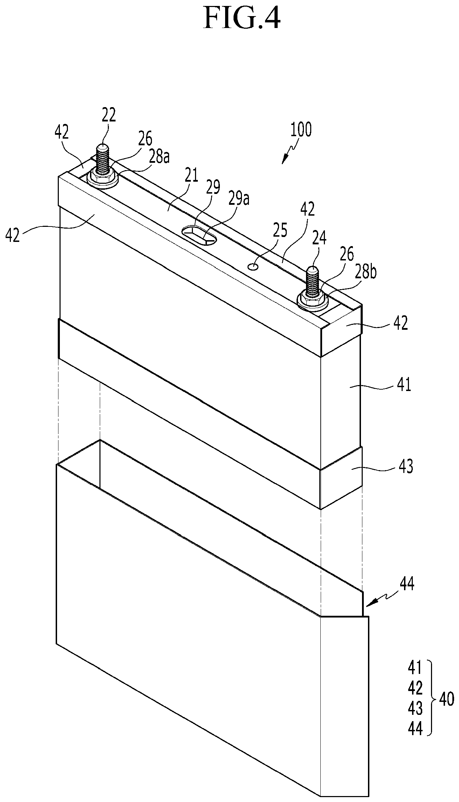

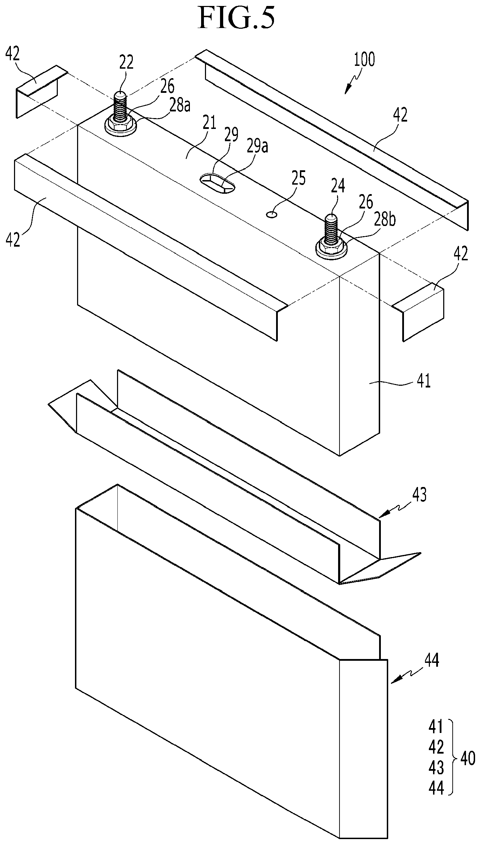

FIG. 3 illustrates a cross-sectional view with respect to a line III-III of FIG. 1, FIG. 4 illustrates a perspective view of a state in which a fourth tape is separated while first to third tapes are attached to a case, and FIG. 5 illustrates a perspective view of a state in which second to fourth tapes are separated while a first tape is attached to wrap a circumference of the case.

As shown in FIG. 3 to FIG. 5, the insulation tape 40 may be attached as at least two divided parts to the external surface of the case 30. The insulation tape 40 may include a first tape 41 attached along a circumference of the case 30, a second tape 42 attached to a side at which the terminals 22 and 24 protrude from the case 30, a third tape 43 attached to a bottom side 33 of the case 30, and a fourth tape 44 that covers the second tape 42 and the third tape 43.

The first tape 41 may be attached to insulate the external surface of the case 30 in a first manner. The first tape 41 may be attached along the circumference of the case 30 between a part at which the terminals 22 and 24 protrude from the case 30 and the bottom side 33 of the case 30. By the attachment of the first tape 41, the cap plate 21 and the external surface of the bottom side 33 of the case 30 may not be insulated but may be exposed. The second tape 42 may be attached to the first tape 41 while the second tape 42 may partially overlap the first tape 41.

The second tape 42 may be attached to overlap the first tape 41 at a corner of one side of the case 30. A center portion of the second tape 42 in a length direction may be bent and attached along the corner of the one side of the case 30. An edge of one side of the second tape 42 may extend in a surface direction of the cap plate 21, and an edge of another side of the second tape 42 may extend to cover the surface of the case 30. The second tape 42 may be attached to partially cover the cap plate 21 and the case 30 and thus may be attached to insulate the corner of the case 30 at the part where the cap plate 21 is installed.

When the case 30 is formed as a rectangle, multiple second tapes 42 may be attached to the position where the cap plate 21 is installed while varying an attached length. For example, the second tape 42 may be attached such that a part of the second tape 42 that is attached to the corner that corresponds to a long side of the case 30 may be longer than a part of the second tape 42 that is attached to a corner that corresponds to a short side of the case 30. The second tape 42 may be attached to an external side of the first tape 41 such that the second tape 42 may partially overlap the external side of the first tape 41, thereby further insulating the corner of the case 30 at the position where the cap plate 21 is installed.

The third tape 43 may be attached to overlap the first tape 41 at the corner of the bottom side of the case 30. In detail, a center portion of the third tape 43 in the length direction may be bent and attached along the corner of the bottom side of the case 30. An edge of one side of the second tape 42 may extend in the surface direction of the cap plate 21. An edge of another side of the second tape 42 may extend to partially cover the bottom side of the case 30. The third tape 43 may be attached to insulate the corner of the case 30 at the bottom side position. The third tape 43 may include the same material as the first tape 41 and the second tape 42.

The fourth tape 44 covers the entire area of the first tape 41, the second tape 42, and the third tape 43 with the same area as the first tape 41. The fourth tape 44 may be attached along the circumference of the case 30. While the first tape 41, the second tape 42, and the third tape 43 may insulate a part of the case 30 with double layers, the fourth tape 44 may be attached to cover the first tape 41, the second tape 42, and the third tape 43 to partially insulate the case 30 with three layers. The fourth tape 44 allows multiple insulation performance at the separated parts of the edge of the first tape 41, the second tape 42, and the third tape 43 to thus prevent permeation of a foreign material such as moisture into the case 30 and prevent generation of damage to the rechargeable battery 100 caused by the foreign material.

The insulation tape 40 may be attached at the edge of the case 30 while overlapping the case 30 with at least three sheets, such that external moisture may not pass through the insulation tape 40 to be provided into the case 30. Accordingly, generation of a short circuit and corrosion of the rechargeable battery 100 may be prevented, and durability and stability of the rechargeable battery may be improved.

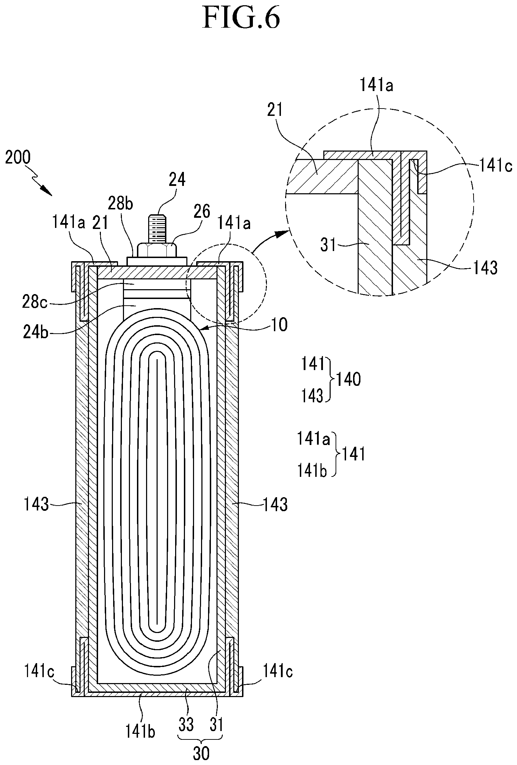

FIG. 6 illustrates a cross-sectional view of a rechargeable battery according to another exemplary embodiment. The same reference numerals used in FIG. 1 to FIG. 5 indicate the same members with the same functions in FIG. 6. A detailed description with regard to features indicated by the same reference numerals will not be repeated.

As shown in FIG. 6, an insulation tape 140 of a rechargeable battery 200 according to this exemplary embodiment may include a base tape 141 attached to an external surface of a case 30, and a cover tape 143 that covers the base tape 141. The base tape 141 may include a top base tape 141a attached to cover an edge of a top where the cap plate 21 of the case 30 is installed, and a bottom base tape 141b attached to cover an edge on a bottom side of the case 30.

At least two top base tapes 141a may be attached to the top of the case 30 and may insulate the top of the case 30. One side of the top base tape 141a may be extended to cover a part of the cap plate 21 and another side thereof may extend to cover a part of the case 30. A bent groove 141c overlapping with at least two sheets may be formed at an edge connected to the cover tape 143 in the top tape 141a. As described, the edge of the top base tape 141a may overlap with at least two sheets in order to prevent permeation of a foreign material such as moisture into the case 30.

The bottom base tape 141b may be attached to insulate the bottom side of the case 30. The bottom base tape 141b may be bent along the edge of the bottom side of the case 30. One side of the bottom base tape 141b may extend in a lateral direction of the case 30, and another side of the bottom base tape 141b may be formed to cover the bottom side of the case 30. The bent groove 141c that is bent to overlap with at least two sheets may be formed at the part of the bottom base tape 141b that is connected to the cover tape 143, for example, an edge of the bottom base tape 141b extending in the lateral direction of the case 30. The edge of the bottom base tape 141b may overlap with at least two sheets. Accordingly, permeation of a foreign material such as moisture into the case 30 may be prevented.

The cover tape 143 may be attached to the external surface of the case 30. Respective sides of the edge of the cover tape 143 may be inserted into the bent groove 141c of the top base tape 141a and the bent groove 141c of the bottom base tape 141b. The cover tape 143 may be attached to cover the top tape 141a and the bottom tape 141b while being inserted into the bent grooves 141c of the top tape 141a and the bottom tape 141b, thereby preventing permeation of a foreign material such as moisture into the case 30 and further improving durability of the rechargeable battery 100.

By way of summation and review, a square rechargeable battery includes an electrode group (i.e., an electrode assembly) including an anode and a cathode positioned with a separator interposed therebetween, a case with a space for housing the electrode group, and a cap plate for sealing the case and having a terminal hole into which an electrode terminal is inserted, the electrode terminal being electrically connected with the electrode group and inserted into the terminal hole so as to be outwardly protruded from the case.

An insulation tape is attached to an external part of the rechargeable battery to prevent a foreign material such as moisture from being permeated into the case. However, the insulation tape is generally attached to a circumference of the rechargeable battery as a single insulation tape. Therefore, foreign materials such as moisture may be easily permeate into the case at a boundary of the case and the insulation tape. The durability of the insulating tape may be worsened by corrosion of the rechargeable battery.

As described above, embodiments provide a rechargeable battery in which permeation of a foreign material such as moisture is prevented by attaching at least two sheets of insulation tape to an external surface of a case. Thereby, durability of the rechargeable battery may be improved.

It is clear for a person skilled in the art that the disclosed embodiments can also be combined where possible.

## Claims

1. A rechargeable battery (100), comprising:
an electrode assembly (10) to perform charging and discharging;
an electrode terminal (22,24) electrically connected to the electrode assembly (10);
a case (30) that receives the electrode assembly (10);
a cap plate (21) coupled to the case (30); and
an insulation tape (40) including a portion that is separated into at least two pieces and attached to an external surface of the case, edge portions of the case overlapping with at least three sheets of the insulation tape attached to the external surface of the case,
**characterized in that** the insulation tape (40) is configured to overlap a corner of a bottom side of the case (30) and a corner of the case (30) where the cap plate (21) is coupled to the case (30), with at least three sheets of the insulating tape (40).

2. The rechargeable battery as claimed in claim 1, wherein
the insulation tape (40) includes:
a first tape (41) attached to a surface of the case (30) along a circumference of the case (30);
a second tape (42) attached to overlap a part of the first tape (41) at an edge of one side of the first tape (41);
a third tape (43) attached to overlap a part of the first tape (41) at an edge of another side of the first tape (41) facing the edge of the one side of the first tape (41); and
a fourth tape (44) attached along the circumference of the case (30) and covering the second tape (42) and the third tape (43).

3. The rechargeable battery as claimed in claim 2, wherein
the second tape (42) is configured to overlap a part of the first tape (41) along an edge portion of the case (30) at a position where the cap plate (21) of the case (30) is located.

4. The rechargeable battery as claimed in claim 2 or 3, wherein
the second tape (42) is bent along one of the edge portions of the case (30),
an edge of one side of the second tape (42) is configured to extend in a surface direction of the cap plate (21), and
an edge of another side of the second tape (42) is configured to extend to cover a part of the surface of the case (30).

5. The rechargeable battery as claimed in one of claims 2 to 4, wherein
the third tape (43) is configured to overlap a part of the first tape (41) along an edge of the first tape (41) at a bottom side of the case (30).

6. The rechargeable battery as claimed in one of claims 2 to 5, wherein
the third tape (43) is bent along another of the edge portions of the case (30),
an edge of one side of the third tape (30) is configured to extend to cover a bottom side of the case (30), and
an edge of another side of the third tape (43) is configured to extend toward a center of the case (30) in a length direction of the case (30).

7. The rechargeable battery as claimed in one of claims 2 to 6, wherein
the fourth tape (44) is configured to cover a same area as the first tape (41).

8. The rechargeable battery as claimed in one of claims 2 to 7, wherein
the fourth tape (44) is attached to an external side of the case (30) to overlap an overlapping part of edges of the first tape (41), an edge of the second tape (42), and an edge of the third tape (43).

9. The rechargeable battery as claimed in claim 1, wherein
the insulation tape includes:
a base tape (141) attached along a corner at a position where the cap plate (30) is coupled to the case (30) and a corner at a bottom side of the case (30), an edge of the base tape (141) including multiple bends such that the edge of the base tape (141) overlaps itself with at least twice; and
a cover tape (143) covering the base tape (141), the cover tape (143) being attached along a circumference of the case (30).

10. The rechargeable battery as claimed in claim 9, wherein
a bent groove (141c) is formed in an end of the edge of the base tape (141).

11. The rechargeable battery as claimed in claim 9 or 10, wherein
the cover tape (143) is attached to the circumference of the case (30) such that an edge of the cover tape (143) is inserted into the bent groove (141c).

12. The rechargeable battery as claimed in one of claims 9 to 11, wherein
the base tape (141) includes:
a top base tape (141a) attached along a corner of the case (30) at a position where the cap plate (21) is coupled to the case (30); and
a bottom base tape (141b) attached along a corner at the bottom side of the case (30).

13. The rechargeable battery as claimed in claim 12, wherein
the top base tape (141a) is bent along a corner of the case (30),
an edge of one side of the top base tape (141a) is configured to extend in a surface direction of the cap plate (21), and
an edge of another side of the top base tape (141a) is configured to extend to cover a part of a surface of the case (30).

14. The rechargeable battery as claimed in claim 12 or 13, wherein
the bottom base tape (141b) is bent along a corner at a bottom side of the case (30),
an edge of one side of the bottom base tape (141b) is configured to extend to cover the bottom side of the case (30), and
an edge of another side of the bottom base tape (141b) is configured to extend toward a lateral side of the case (30).

## Patentansprüche

1. Eine wiederaufladbare Batterie (100), aufweisend:
eine Elektrodenanordnung (10), um Laden und Entladen durchzuführen;
einen Elektrodenanschluss (22, 24), der mit der Elektrodenanordnung (10) elektrisch verbunden ist;
ein Gehäuse (30), das die Elektrodenanordnung (10) aufnimmt;
eine Deckplatte (21), die mit dem Gehäuse (30) gekoppelt ist; und
ein Isolierband (40), das einen Abschnitt, der in zumindest zwei Stücke getrennt ist und an einer Außenfläche des Gehäuses befestigt ist, aufweist, wobei Randabschnitte des Gehäuses mit zumindest drei Folien des Isolierbandes, die an der Außenfläche des Gehäuses befestigt sind, überlappen,
**dadurch gekennzeichnet, dass** das Isolierband (40) konfiguriert ist, um eine Ecke einer Unterseite des Gehäuses (30) und eine Ecke des Gehäuses (30), an der die Deckplatte (21) mit dem Gehäuse (30) gekoppelt ist, mit zumindest drei Folien des Isolierbandes (40) zu überlappen.

2. Die wiederaufladbare Batterie nach Anspruch 1, wobei
das Isolierband (40) aufweist:
ein erstes Band (41), das entlang eines Umfangs des Gehäuses (30) an einer Oberfläche des Gehäuses (30) befestigt ist;
ein zweites Band (42), das befestigt ist, um einen Teil des ersten Bandes (41) an einem Rand einer Seite des ersten Bandes (41) zu überlappen;
ein drittes Band (43), das befestigt ist, um einen Teil des ersten Bandes (41) an einem Rand einer weiteren Seite des ersten Bandes (41), der dem Rand der einen Seite des ersten Bandes (41) zugewandt ist, zu überlappen; und
ein viertes Band (44), das entlang des Umfangs des Gehäuses (30) befestigt ist und das zweite Band (42) und das dritte Band (43) bedeckt.

3. Die wiederaufladbare Batterie nach Anspruch 2, wobei
das zweite Band (42) konfiguriert ist, um einen Teil des ersten Bandes (41) entlang eines Randabschnitts des Gehäuses (30) in einer Position, in der die Deckplatte (21) des Gehäuses (30) angeordnet ist, zu überlappen.

4. Die wiederaufladbare Batterie nach Anspruch 2 oder 3, wobei
das zweite Band (42) entlang eines der Randabschnitte des Gehäuses (30) gebogen ist,
ein Rand einer Seite des zweiten Bandes (42) konfiguriert ist, um sich in eine Oberflächenrichtung der Deckplatte (21) zu erstrecken, und
ein Rand einer weiteren Seite des zweiten Bandes (42) konfiguriert ist, um sich so zu erstrecken, dass er einen Teil der Oberfläche des Gehäuses (30) bedeckt.

5. Die wiederaufladbare Batterie nach einem der Ansprüche 2 bis 4,
wobei
das dritte Band (43) konfiguriert ist, um einen Teil des ersten Bandes (41) entlang eines Rands des ersten Bandes (41) auf einer Unterseite des Gehäuses (30) zu überlappen.

6. Die wiederaufladbare Batterie nach einem der Ansprüche 2 bis 5,
wobei
das dritte Band (43) entlang eines weiteren der Randabschnitte des Gehäuses (30) gebogen ist,
ein Rand einer Seite des dritten Bandes (30) konfiguriert ist, um sich so zu erstrecken, dass er eine Unterseite des Gehäuses (30) bedeckt, und
ein Rand einer weiteren Seite des dritten Bandes (43) konfiguriert ist, um sich in einer Längsrichtung des Gehäuses (30) zu einer Mitte des Gehäuses (30) hin zu erstrecken.

7. Die wiederaufladbare Batterie nach einem der Ansprüche 2 bis 6,
wobei
das vierte Band (44) konfiguriert ist, um einen selben Bereich wie das erste Band (41) zu bedecken.

8. Die wiederaufladbare Batterie nach einem der Ansprüche 2 bis 7,
wobei
das vierte Band (44) an einer Außenseite des Gehäuses (30) befestigt ist, um einen überlappenden Teil von Rändern des ersten Bandes (41), einen Rand des zweiten Bandes (42) und einen Rand des dritten Bandes (43) zu überlappen.

9. Die wiederaufladbare Batterie nach Anspruch 1, wobei
das Isolierband aufweist:
ein Basisband (141), das entlang einer Ecke in einer Position, in der die Deckplatte (30) mit dem Gehäuse (30) gekoppelt ist, und einer Ecke auf einer Unterseite des Gehäuses (30) befestigt ist, wobei ein Rand des Basisbandes (141) mehrere Biegungen derart, dass der Rand des Basisbandes (141) zumindest zweimal sich selbst überlappt, aufweist; und
ein Deckband (143), das das Basisband (141) bedeckt, wobei das Deckband (143) entlang eines Umfangs des Gehäuses (30) befestigt ist.

10. Die wiederaufladbare Batterie nach Anspruch 9, wobei
eine gebogene Nut (141c) in einem Ende des Rands des Basisbandes (141) ausgebildet ist.

11. Die wiederaufladbare Batterie nach Anspruch 9 oder 10, wobei
das Deckband (143) am Umfang des Gehäuses (30) derart befestigt ist, dass ein Rand des Deckbandes (143) in die gebogene Nut (141c) eingesetzt ist.

12. Die wiederaufladbare Batterie nach einem der Ansprüche 9 bis 11,
wobei
das Basisband (141) aufweist:
ein oberes Basisband (141a), das entlang einer Ecke des Gehäuses (30) in einer Position, in der die Deckplatte (21) mit dem Gehäuse (30) gekoppelt ist, befestigt ist; und
ein unteres Basisband (141), das entlang einer Ecke an der Unterseite des Gehäuses (30) befestigt ist.

13. Die wiederaufladbare Batterie nach Anspruch 12, wobei
das obere Basisband (141a) entlang einer Ecke des Gehäuses (30) gebogen ist,
ein Rand einer Seite des oberen Basisbandes (141a) konfiguriert ist, um sich in eine Oberflächenrichtung der Deckplatte (21) zu erstrecken, und
ein Rand einer weiteren Seite des oberen Basisbandes (141a) konfiguriert ist, um sich so zu erstrecken, dass er einen Teil einer Oberfläche des Gehäuses (30) bedeckt.

14. Die wiederaufladbare Batterie nach Anspruch 12 oder 13, wobei
das untere Basisband (141b) entlang einer Ecke an einer Unterseite des Gehäuses (30) gebogen ist,
ein Rand einer Seite des unteren Basisbandes (141b) konfiguriert ist, um sich so zu erstrecken, dass er die Unterseite des Gehäuses (30) bedeckt, und
ein Rand einer weiteren Seite des unteren Basisbandes (141b) konfiguriert ist, um sich zu einer lateralen Seite des Gehäuses (30) hin zu erstrecken.

## Revendications

1. Batterie rechargeable (100) comprenant :
un ensemble d'électrodes (10) pour réaliser la charge et la décharge :
une borne d'électrode (22, 24) raccordée électriquement à l'ensemble d'électrodes (10) ;
un boîtier (30) qui reçoit l'ensemble d'électrodes (10) ;
une plaque formant capuchon (21) couplée au boîtier (30) ; et
une bande d'isolation (40) comprenant une partie qui est séparée en au moins deux pièces et fixée sur une surface externe du boîtier, des parties de bord du boîtier recouvrant au moins trois feuilles de la bande d'isolation fixée sur la surface externe du boîtier,
**caractérisée en ce que** la bande d'isolation (40) est configurée pour recouvrir un coin d'un côté inférieur du boîtier (30), et un coin du boîtier (30) où la plaque formant capuchon (21) est couplée au boîtier (30), avec au moins trois feuilles de la bande d'isolation (40).

2. Batterie rechargeable selon la revendication 1, dans laquelle :
la bande d'isolation (40) comprend :
une première bande (41) fixée sur une surface du boîtier (30) le long d'une circonférence du boîtier (30) ;
une deuxième bande (42) fixée pour recouvrir une partie de la première bande (41) au niveau d'un bord d'un côté de la première bande (41) ;
une troisième bande (43) fixée pour recouvrir une partie de la première bande (41) au niveau d'un bord d'un autre côté de la première bande (41) faisant face au bord du premier côté de la première bande (41) ; et
une quatrième bande (44) fixée le long de la circonférence du boîtier (30) et recouvrant la deuxième bande (42) et la troisième bande (43).

3. Batterie rechargeable selon la revendication 2, dans laquelle :
la deuxième bande (42) est configurée pour recouvrir une partie de la première bande (41) le long d'une partie de bord du boîtier (30) dans une position dans laquelle la plaque formant capuchon (21) du boîtier (30) est positionnée.

4. Batterie rechargeable selon la revendication 2 ou 3, dans laquelle :
la deuxième bande (42) est pliée le long de l'une des parties de bord du boîtier (30),
un bord d'un côté de la deuxième bande (42) est configuré pour s'étendre dans une direction de surface de la plaque formant capuchon (21), et
un bord d'un autre côté de la deuxième bande (42) est configuré pour s'étendre afin de recouvrir une partie de la surface du boîtier (30).

5. Batterie rechargeable selon l'une des revendications 2 à 4, dans laquelle :
la troisième bande (43) est configurée pour recouvrir une partie de la première bande (41) le long d'un bord de la première bande (41) au niveau d'un côté inférieur du boîtier (30).

6. Batterie rechargeable selon l'une des revendications 2 à 5, dans laquelle :
la troisième bande (43) est pliée le long d'une autre des parties de bord du boîtier (30),
un bord d'un côté de la troisième bande (30) est configuré pour s'étendre afin de recouvrir un côté inférieur du boîtier (30), et
un bord d'un autre côté de la troisième bande (43) est configuré pour s'étendre vers un centre du boîtier (30) dans une direction de longueur du boîtier (30).

7. Batterie rechargeable selon l'une des revendications 2 à 6, dans laquelle :
la quatrième bande (44) est configurée pour recouvrir une même zone que la première bande (41).

8. Batterie rechargeable selon l'une des revendications 2 à 7, dans laquelle :
la quatrième bande (44) est fixée à un côté externe du boîtier (30) afin de recouvrir une partie de chevauchement des bords de la première bande (41), d'un bord de la deuxième bande (42) et d'un bord de la troisième bande (43).

9. Batterie rechargeable selon la revendication 1, dans laquelle :
la bande d'isolation comprend :
une bande de base (141) fixée le long d'un coin dans une position dans laquelle la plaque formant capuchon (30) est couplée au boîtier (30) et à un coin au niveau du côté inférieur du boîtier (30), un bord de la bande de base (141) comprenant plusieurs plis de sorte que le bord de la bande de base (141) se replie au moins deux fois ; et
une bande formant couvercle (143) recouvrant la bande de base (141), la bande formant couvercle (143) étant fixée le long d'une circonférence du boîtier (30).

10. Batterie rechargeable selon la revendication 9, dans laquelle :
une rainure pliée (141c) est formée dans une extrémité du bord de la bande de base (141).

11. Batterie rechargeable selon la revendication 9 ou 10, dans laquelle :
la bande formant couvercle (143) est fixée à la circonférence du boîtier (30) de sorte qu'un bord de la bande formant couvercle (143) est inséré dans la rainure pliée (141c).

12. Batterie rechargeable selon l'une des revendications 9 à 11, dans laquelle :
la bande de base (141) comprend :
une bande de base supérieure (141a) fixée le long d'un coin du boîtier (30) dans une position dans laquelle la plaque formant capuchon (21) est couplée au boîtier (30) ; et
une bande de base inférieure (141b) fixée le long d'un coin au niveau du côté inférieur du boîtier (30).

13. Batterie rechargeable selon la revendication 12, dans laquelle :
la bande de base supérieure (141a) est pliée le long d'un coin du boîtier (30),
un bord d'un côté de la bande de base supérieure (141a) est configuré pour s'étendre dans une direction de surface de la plaque formant capuchon (21), et
un bord d'un autre côté de la bande de base supérieure (141a) est configuré pour s'étendre afin de recouvrir une partie d'une surface du boîtier (30).

14. Batterie rechargeable selon la revendication 12 ou 13, dans laquelle :
la bande de base inférieure (141b) est pliée le long d'un coin au niveau d'un côté inférieur du boîtier (30),
un bord d'un côté de la bande de base inférieure (141b) est configuré pour s'étendre afin de recouvrir le côté inférieur du boîtier (30), et
un bord d'un autre côté de la bande de base inférieure (141b) est configuré pour s'étendre vers un côté latéral du boîtier (30).
